# EUROPEAN PATENT APPLICATION

(11) **EP 4 488 517 A1**
(43) Date of publication of application: **08.01.2025**
(21) Application number: 23183079.5
(22) Date of filing: 03.07.2023
(51) Int. Cl.: F03D 80/70, F16C 33/66, F16N 31/02, F16C 17/02, F16C 17/10, F16C 33/10

(54) **LUBRICATED BEARING ARRANGEMENT**

(71) Applicant: Siemens Gamesa Renewable Energy A/S, 7330 Brande (DK)
(72) Inventor: Frydendal, Niels Karl, 7400 Herning (DK); Petronic, Vujadin, 7330 Brande (DK); Poulsen, Søren, 7500 Holstebro (DK); Thomsen, Kim, 9520 Skørping (DK); Thorhauge, Morten, 8680 Ry (DK)
(74) Representative: SGRE-Association

(57) **Abstract**

Lubricated bearing arrangement for a wind turbine, comprising a bearing (5) with a rotatable outer ring (6), a stationary inner ring (7) and bearing elements (23) arranged between both rings (6, 7) for supporting the outer ring (6) at the inner ring (7), wherein a liquid lubricant is supplied to the bearing (5), characterized by
- a ring-like first collecting means (14) arranged at one side of the rotating outer ring (6) and adapted to collect lubricant leaking from the bearing (5), which collecting means (14) rotates with the outer ring (6) and comprises at least one collecting element (29) adapted to lift lubricant from a lower position to an upper position,
- a ring-like second collecting means (18) arranged stationary and adapted to receive lifted lubricant dropping from the first collecting means (14), which second collecting means (18) comprises at least one catching means (20) adapted to catch lubricant flowing gravity driven along the outside surface (17) of the second collecting means (18), and
- transport means (39) for transporting the lubricant caught by the catching means (20) away from the second collecting means (18) by gravity.

## Description

The invention refers to lubricated bearing arrangement for a wind turbine, comprising a bearing with a rotatable outer ring, a stationary inner ring and bearing elements arranged between both rings for supporting the outer ring at the inner ring, wherein a liquid lubricant is supplied to the bearing.

A wind turbine usually comprises at least one lubricated bearing arrangement as the main bearing. A hub, to which a number of rotor blades are attached, is usually connected to the rotating outer ring, which is coupled to the rotor of a generator converting the rotation into electric power, as commonly known. The bearing arrangement comprises a bearing with a rotatable outer ring and a stationary inner ring, which may be realized by means of an elongated hollow shaft. Between both rings and number of bearing elements is arranged. When the bearing is a fluid film bearing, the bearing elements are sliding pads, when the bearing is a roller bearing, the bearing elements are rollers. In any case a lubrication of the bearing area is necessary. A lubricant is supplied into a sealed area between both rings, where the bearing elements are arranged, so that they are constantly provided with a lubricant. Usually, the whole space is completely filled with the lubricant, so that a proper lubrication is given at each position. During operation a certain amount of leakage occurs both at the downwind side and the upwind side of the bearing. The upwind side is the bearing side facing to the hub, the downwind side is the opposite side of the bearing. The leaked lubricant collects at the lowest point of the bearing both at the downwind side and the upwind side. A tank, which contains the lubricant, is arranged at the downwind side either in their stationary hollow shaft or in a nacelle, so that the leaked lubricant at the downwind side can easily be collected and transferred to the tank. But also the collected lubricant at the upwind side needs to be transferred back to the tank to avoid an uncontrolled spreading of the leaked lubricant. This return transport is prevented by the hub attached to the outer ring, which, as mentioned, rotates, so that a transport passage to the other downwind side cannot be realized through the bearing itself.

It is an object of the invention to provide an improved lubricated bearing arrangement for such a wind turbine allowing for a simplified back transport of leaked lubricant, especially from the upwind side.

For addressing the object, the invention proposes a lubricated bearing arrangement as depicted above, further comprising
- a ring-like first collecting means arranged at one side of the rotating outer ring and adapted to collect lubricant leaking from the bearing, which collecting means rotates with the outer ring and comprises at least one collecting element adapted to lift lubricant from a lower position to an upper position,
- a ring-like second collecting means arranged stationary and adapted to receive lifted lubricant dropping from the first collecting means, which second collecting means comprises at least one catching means adapted to catch lubricant flowing gravity driven along the outside surface of the second collecting means, and
- transport means for transporting the lubricant caught by the catching means away from the second collecting means by gravity.

The invention proposes a bearing arrangement, which allows for a gravity driven back transport of leaked lubricant, usually an oil, especially from leaked upwind side lubricant to a tank or container. It comprises simple mechanical means adapted to mechanically lift a lubricant collected at the lowest point of the bearing, preferably at the upwind side, to an elevated upper position and to collect or catch the lifted leaked lubricant at an elevated position, from where it can flow gravity driven in the direction of the tank. To realize this, the arrangement comprises a ring like first collecting means. This first collecting means is arranged at the upwind side of the rotating outer ring of the bearing. The first collecting means is adapted to collect lubricant leaking from the bearing. The lubricant leaks through a respective seal arrangement, which seals the lubricant within the bearing space of the bearing. As the first collecting means is ring like and connected to the rotating outer ring and extending around the outer ring, any leaking lubricant will automatically drop or flow on the inner circumference of this ring like collecting means. The first collecting means is provided with at least one collecting element, which is adapted to lift the lubricant from a lower position to an elevated upper position. As the ring like first collecting means is attached to the rotating outer ring, the first collecting means necessarily rotates with the outer ring. Inevitably also the collecting element rotates with the collecting means, so that any leaked lubricant, which collects at a lower point of the bearing, will constantly be lifted to an upper position, whenever the collecting element rotates through the area where the leaked lubricant collects. The collecting element takes some of the collected lubricant and, with the ongoing rotation, takes it along the rotation path to an upper position, from where the lifted lubricant drops downwards.

The lubricant drops on a ring like second collecting means, which is stationary arranged. This second collecting means is adapted to receive the lifted lubricant dropping from the first collecting means on a respective receiving surface. This receiving surface is an outer surface of the ring like arrangement or geometry of the second collecting means, while the surface of the first collecting means, on which the lubricant leaking from the sealing drops, is an inner surface. The first ring like collecting means surrounds the second ring like collecting means, which is arranged concentrically within the first ring like collection means.

The second collecting means is provided with at least one catching means, which is adapted to catch the lubricant flowing gravity driven along the outside surface of the second collecting means. The catching means is arranged at an elevated position compared to the lowest point of the bearing where the leaked lubricant collects, so that the caught lubricant is finally collected at an elevated position at the second collecting means. A transport means is assigned or connected to the catching means. This transport means is adapted to transport the lubricant collected at the catching means away from the catching means respectively second collecting means by gravity. This is possible, as the lubricant collected by the catching means is collected at an elevated position, for example a position corresponding to the half of the diameter of the bearing, so that the lubricant can easily flow gravity driven to a lower position, from where it is finally transported into the tank. As the bearing is certainly open to both sides, it is possible to arrange the transport means such that the leaked lubricant collected by the catching means is transported from the catching means to the inside of the bearing respectively the inner ring, which may be realized by a hollow shaft or the like and finally to the tank. No specific pump arrangement or the like is necessary for transporting the leaked lubricant, especially the leaked upwind side lubricant, back to the tank, as the whole transport of the leaked lubricant from the lowest collecting position and away from the bearing is a pure mechanical and gravity driven operation. Such an inventive collecting and transport arrangement can certainly also be provided at the downwind side, if need be.

According to the invention, the first collecting means may comprise a first collecting ring having a collecting surface provided at the inner circumference for receiving the leaking lubricant, to which collecting ring the at least one collecting element is attached. The collecting ring, which is preferably attached directly to the outer ring, has a specific width, along which it extends axially, so that a sufficiently large inner surface is provided, on which the leaking lubricant can drop and collect.

Preferably several collecting elements are arranged along the collecting surface. During a 360° rotation each single collecting element rotates through the area of the lowest point of the bearing, where the leaked lubricant gatherers, so that, depending on the number of collecting elements, during one rotation several separate amounts of lubricant are taken along the rotation path and lifted to an upper position.

A collecting element is preferably realized as an elongated paddle. Such a paddle is arranged to the inner circumference respectively the inner collecting surface, preferably under an angle smaller than 90° (seen in the direction of rotation) to the collecting surface, so that a kind of gutter is built between the paddle and the collecting surface, which takes the lubricant and lifts it. Preferably the or each paddle extends axially and parallel to the center axis of the collecting ring.

The first collecting means, especially the first collecting ring, is preferably directly attached to the rotating outer ring by means of screw connections. The collecting means respectively the collecting ring is simply bolted axially on the axial front surface of the outer ring, so that it extends axially from the outer ring and encloses or encircles the leakage area.

Also, the second collecting means preferably comprises a second collecting ring provided with the catching means. Although this second collecting ring may be a separate collecting ring which is arranged only for this purpose, in a very preferred embodiment the collecting ring is a seal carrier ring sealing the area or space of the bearing which is provided with the lubricant. As already mentioned, the inner of the bearing, where the bearing elements are provided and are in contact with the running surfaces of the outer and/or inner ring, is sealed. For sealing this area or space radially to the outside, a seal carrier ring is provided, comprising a carrier ring and an elastic seal, which is in contact with a stable ceiling surface of the outer ring. This seal carrier ring is stationary, it may for example be directly or indirectly connected to the inner ring respectively the hollow shaft building the inner ring. As the seal carrier ring has a respective ring shape and a certain axial width or extension, its outer surface may directly be used as a collecting surface, onto which the lifted lubricant drops, and along which outer surface the lubricant flows gravity driven downwards to the catching means. The seal carrier ring therefore serves a double purpose, i.e. as a carrier element for the seal sealing the lubricant area of the bearing, and as a second collecting means respectively collecting ring for collecting the lifted lubricant.

According to the invention it is preferred, that at least two catching means are provided at opposite positions. As the second collecting means is ring like respectively realized by means of a collecting ring respectively the seal carrier ring, it is possible to arrange the two catching means at two opposite positions distanced around 180° around the outer circumference. Preferably they are aligned in the horizontal plane of the diameter respectively at the 90° and 270° positions of the circular second ceiling means.

The or each catching means may be a gutter, wherein the gutter is either realized by a gutter element arranged at the outside surface of the collecting ring. As mentioned, the lifted lubricant flows downwards along the outer surface of the second collecting means respectively the seal carrier ring. It can easily be caught by such a gutter element, which is attached to the outside surface. The gutter element may be like a kind of paddle, which extends in an angle smaller than 90° from the outer surface, so that the lubricant flowing downwards from above directly flows into the realized gutter.

According to an alternative embodiment, the gutter may be realized by a depression provided into the outside surface of the collecting ring. When the seal carrier ring serves as the collecting ring, that depression may be directly machined into the seal carrier ring, which is a massive ring having a respective thickness, so that it is possible to machine the gutter into the outer surface of the seal carrier ring with an appropriate tool. If a separate collecting ring is used, which may be built from a respectively thin sheet metal, the gutter respectively that depression may be pressed into the outer surface.

According to a further embodiment, the second collecting means may comprise at least one transport opening adjacent to the catching means, which transport opening communicates with the transport means connected to the second collecting means. This transport opening acts like a drain, by which the lubricant collected by the catching means is directed to the transport means, which is attached to the second collecting means in communication with the transport opening.

Preferably the transport opening is an axial bore provided in the second collecting means, especially the collecting ring and preferably in the sufficiently thick seal carrier ring, which bore opens to a front surface of the collecting means. The transport means is directly attached to the second collecting means at the transport opening, which is open to the axial front surface of the collecting means respectively ring, so that the leaked lubricant is transported away from the second collecting means respectively the catching means in an axial direction. The further transport direction is defined by the geometry of the transport means, which finally runs to that tank.

The transport means is preferably a hose. Such hose can easily be connected to the second collecting means respectively the transport opening and can easily be laid within the given space according to the needs. The hose may for example be attached to the front surface of the second collecting means and be laid to a lower position, from where it extends into the inner of the bearing to the tank. It is possible to arrange a filter means in the hose or the hose arrangement for removing any impurities contained in the lubricant.

Besides the bearing arrangement, the invention refers to a wind turbine, comprising a lubricated bearing arrangement as depicted above. The wind turbine usually comprises a hub connected to the rotating outer ring and a stationary inner shaft, which builds the inner ring or to which the separate inner ring is attached. The tank may be arranged within the inner shaft, together with a pump or the like for supplying the liquid lubricant, usually oil, to the inner of the bearing. The tank may also be arranged in the nacelle.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principal illustration of an inventive wind turbine,
- Fig. 2: a principal illustration showing the working principle of the inventive lubricated bearing arrangement,
- Fig. 3: a principal illustration of the bearing,
- Fig. 4: a principal illustration of the first and second collecting means,
- Fig. 5: a principal illustration of the second collecting means with the catching means, and
- Fig. 6: a principal illustration of the bearing with the piping arrangement for transporting the caught lubricant away from the catching means.

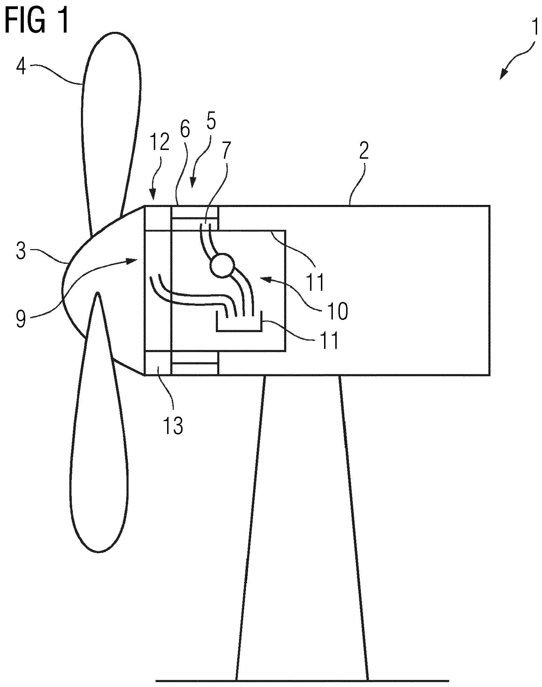

Fig. 1 shows a principal illustration of an inventive wind turbine 1, comprising a nacelle 2 and a hub 3 with turbine blades 4, which hub 3 is rotatably arranged to the nacelle 2 by means of a bearing 5, which is usually named as a main bearing. The bearing 5 comprises a rotatable outer ring 6 and a stationary inner ring 7, comprising an inner shaft 8. The general set up of such a wind turbine comprising a hub attached to a rotatable outer ring of the bearing is commonly known.

The wind turbine 1 comprises a lubricated bearing arrangement 9, part of which is the bearing 5. The lubricated bearing arrangement 9 may further comprises a supply arrangement 10 for supplying a lubricant to the bearing 5, which lubricant is stored in a tank 11. The lubricated bearing arrangement 9 further comprises a leakage lubricant collection arrangement 12, adapted for collecting lubricant leaking at the upwind side 13 of the bearing 5 and 4 transporting it back to the tank 11, wherein this transfer is mainly gravity driven.

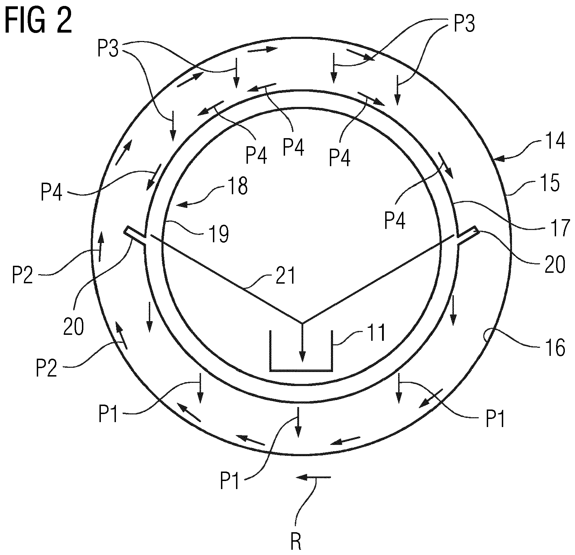

Fig. 2 shows the working principle of the lubricated bearing arrangement 9 respectively the leakage lubricant collection arrangement 12. As mentioned, the bearing 5 is supplied with the liquid lubricant, usually oil. The space of the bearing, where the bearing elements, usually sliding pads, are arranged, is completely flooded with the liquid lubricant. Although this space is sealed, a certain leakage of the lubricant occurs. If the liquid leaks on the upwind side, it is difficult to transfer it back to the tank 11 without using any elaborated pumping arrangements etc. The inventive lubricated bearing arrangement 9 respectively its lubricant collection arrangement 12 uses pure mechanical means for collecting and transferring the leaked upwind side lubricant.

The lubricant bearing arrangement 9 respectively the leakage lubricant collection arrangement 12 comprises a first collecting means 14 comprising a first collecting ring 15 having a collecting surface 16, onto which, as shown by the arrows P1 the upwind side leaking lubricant drops. The first collection means 14 rotates together with the outer ring 6 of the bearing 5, to which outer ring 6 the first collecting means 14 is connected. The direction of rotation is shown by the arrow R. To the inner surface 16 of the first collecting ring 15 one or more collecting elements, which are described in detail later, are attached. The or all collecting elements are adapted to lift the lubricant, which has dropped onto the inner surface 16 and which collects at the lower side of the first collecting ring 15, from this lower position to an elevated position. This lifting process is shown by the arrows P2. This lifting is realized solely by means of the rotation of the first collecting ring 15 together with the collecting elements, which certainly rotate with the collecting ring 15. When the lubricated is lifted to a sufficiently elevated position, it can freely drop down again, as shown by the arrows P3. It drops on the outer surface 17 of a second collecting means 18, which is also realized as a second collecting ring 19. The lubricant now flows along the outer surface 17 of the second collecting ring 19 gravity driven downwards, as shown by the arrows P4. The second collecting ring 19 is provided with at least one, in the shown embodiment with two catching means 20, which are preferably realized as gutters. The leaked lubricant flowing downwards along the surface 17 is collected by the catching means 20 at an elevated position, as both collecting means 20 are arranged preferably at the position corresponding to the half of the diameter of the second collecting ring 19 and therefore at that remarkably high position. From this position, the collected lubricant can now be further transported by a transport means 21, for example a piping arrangement to the tank 11, which piping arrangement can transport the lubricant through the inner ring to the tank 11 which is arranged for example within the inner shaft 8 as shown in fig. 1 or at another position within the nacelle.

As the outer ring 6 is constantly rotating when driven by blowing wind, the first collection ring 15 also rotates constantly, so that a permanent lifting of the leaked lubricant respectively oil is realized, resulting in a permanent collection of the leaked lubricant by the catching means, so that a permanent transfer of the leaked lubricant back to the tank 11 is realized. It is not possible that a remarkable amount of leaked upwind side lubricant may gather either at the lower point of the first collecting ring 15 or any other uncontrolled position.

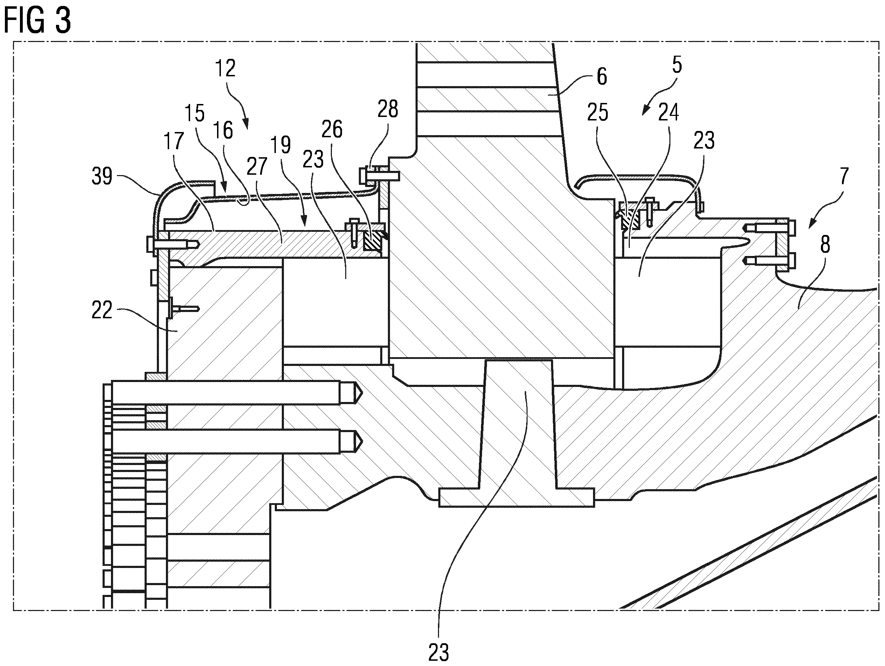

Fig. 3 shows the bearing 5 and main parts of the leakage lubricant collecting arrangement 12 in more detail. The figure shows the outer ring 6, which engages into the stationary inner ring 7, which is realized mainly by the hollow shaft 8 and a terminal flange 22, which is bolted to the hollow shaft 8. The bearing 5 is a sliding bearing comprising several sliding pads 23 providing an axial and radial guided sliding of the rotatable outer ring 6 relative to the stationary inner ring 7. The whole space 24 between the outer ring 6 and the inner ring 7 is flooded with the lubricant. This space 24 is sealed by respective sealing means 25 at the downwind site and 26 at the upwind side, which sealing means 26 is arranged at a ceiling carrier ring 27, as shown in a respective groove or notch where it is fixated. The seal carrier ring 27 is attached to the stationary inner ring 7 by means of respective screws and holding plates as shown and is therefore also stationary. The seal carrier ring 27 acts as the second collecting ring 19, which is the second collecting means 18. So, the seal carrier ring 27 is part of the leakage lubricated collecting arrangement 12 and serves therefore a double function, namely the primary function as the seal carrier ring carrying the seal means 26, and the secondary function as a second collecting ring for collecting any leaked upwind side lubricant which shall be transferred back to the tank 11.

The figure further shows the first collecting ring 15, which is realized as a kind of cover and which radially surrounds the second collecting ring 19, namely the seal carrier ring 27. The cover-like first collecting ring 15 is attached to the outer ring by means of screw connections 28.

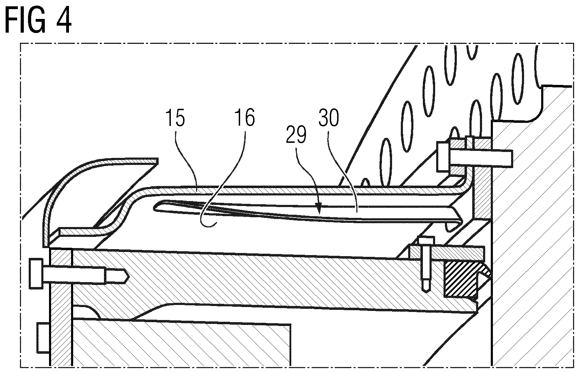

Any lubricant leaking on the upwind side will leak through the seal element 26. It will therefore, as shown by the arrows P1 in figure 2, drop in a lower area of the arrangement onto the surface 16 of the first collecting ring 15, as explained to fig. 2. As already mentioned, the first collecting ring 15 is equipped with at least one, preferably several collecting elements 29, see figure 4, which are preferably realized as elongated paddles 30, which preferably extend in an axial direction, as shown in fig. 4. These paddles 30 are equally distributed around the circumference of the collecting surface 16. As the first collecting ring 15 is attached to the outer ring 6, it will rotate with the outer ring 6. Therefore, any leaked lubricant, which gatherers on the collecting surface 16 of the first collecting ring 15, will be taken along by the paddles 30 and will therefore be lifted as shown by the arrows P2 in fig. 2 due to the rotation according to arrow R. When being lifted to a sufficiently high position, the collected lubricant will again drop down from the paddles 30 respectively the collecting surface 16 onto the second collecting surface 17 of the second collecting ring 19 respectively the seal carrier ring 27, as shown by the arrows P3 in fig. 2. It will then flow along the outer surface 17 as shown in fig. 2 by the arrows P4.

As already explained, the second collecting means 18 respectively the second collecting ring 19 is equipped with preferably two catching means 20. In the shown embodiment, the seal carrier ring 27 is provided with both catching means 20, which, see fig. 2, are provided at opposite positions in a 180° distance preferably at the 90° and 270° positions. Both catching means 20 are realized as gutters 31, which are realized as a depression 32 formed into the collecting surface 17 of the seal carrier ring 27. The depression 32 respectively the gutter 31 have an axial extension, so that the lubricant flowing along the collecting surface 17 is completely collected and caught by the gutter 31.

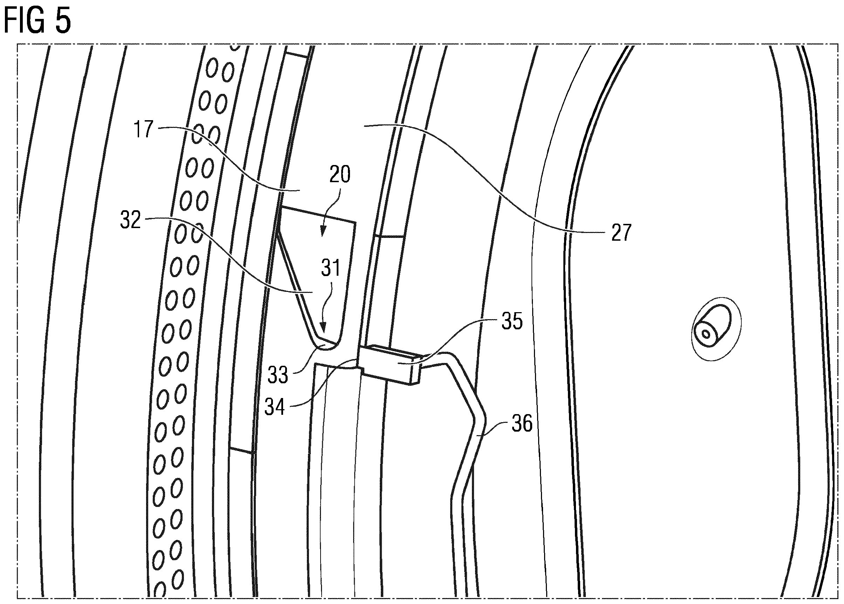

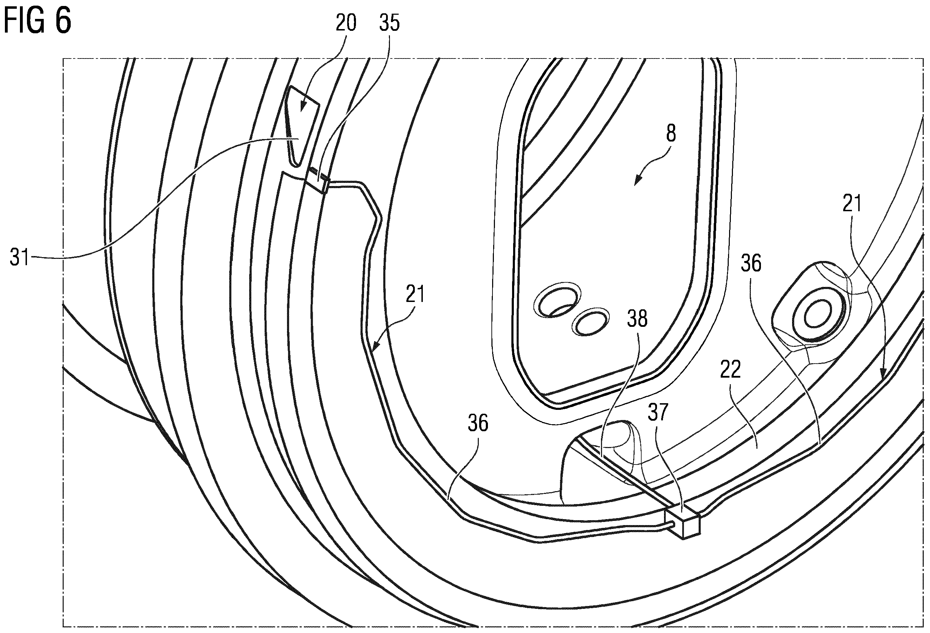

As fig. 5 shows, the gutter 31 is provided with a transport opening 33, which extends axially. The transport opening 33 terminates both at the lowest position of the gutter 31 and axially at the front surface 34 of the seal carrier ring 27. To the front surface 34 a connection piece 35 is attached, which communicates with the transport opening 33. To the connection piece 35 the transport means 21 in form of a piping 36 is attached, which, see fig. 6, is guided along the front surface of the terminal flange 22 to a further connection piece 37, where, see fig. 6, both pipings 36 coming from both catching means 20 are connected. The terminal flange 22 is provided with a further transport bore, which is not shown in detail, and which extends axially. A further piping 38 is connected to the transport bore, which piping 38 then runs to the tank 11. The leaked lubricant caught by both gutters 31, where it is caught in an elevated position, can therefore flow gravity-driven through the pipings 36 downwards for further distribution and transfer back to the tank 11 respectively into the hollow shaft 8. Instead of using pipings 36 as a transport means 21 for transporting the lubricant away from the seal carrier ring 27, also hoses may be used.

The first collecting ring 15, which radially covers the second collecting ring 19 may comprise a radial opening, which may be covered by means of a removable cover. This opening acts as a maintenance opening, through which access is provided to the respective gutter 31. The first collecting ring 15 may be a one-piece ring or may comprise two or more separate ring segments. The seal carrier ring 27 usually is a one-piece ring. Further, a terminal cover 39 may be attached to the second collecting ring 19 respectively the seal carrier ring 27, which cover 40 covers or bridges the small gap between the first collecting ring 19 and the covering first collecting ring 15, as shown in fig. 3. This cover 40 is preferably segmented and screwed to the second collecting ring 19.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Lubricated bearing arrangement for a wind turbine, comprising a bearing (5) with a rotatable outer ring (6), a stationary inner ring (7) and bearing elements (23) arranged between both rings (6, 7) for supporting the outer ring (6) at the inner ring (7), wherein a liquid lubricant is supplied to the bearing (5), **characterized by**
- a ring-like first collecting means (14) arranged at one side of the rotating outer ring (6) and adapted to collect lubricant leaking from the bearing (5), which collecting means (14) rotates with the outer ring (6) and comprises at least one collecting element (29) adapted to lift lubricant from a lower position to an upper position,
- a ring-like second collecting means (18) arranged stationary and adapted to receive lifted lubricant dropping from the first collecting means (14), which second collecting means (18) comprises at least one catching means (20) adapted to catch lubricant flowing gravity driven along the outside surface (17) of the second collecting means (18), and
- transport means (21) for transporting the lubricant caught by the catching means (20) away from the second collecting means (18) by gravity.

2. Lubricated bearing arrangement according to claim 1, **characterized in that** the first collecting means (14) comprises a collecting ring (15) having a collecting surface (16) provided at the inner circumference for receiving the leaking lubricant, to which collecting ring (15) the at least one collecting element (29) is attached.

3. Lubricated bearing arrangement according to claim 2, **characterized in that** several collecting elements (29) are arranged along the collecting surface (16).

4. Lubricated bearing arrangement according to claim 2 or 3, **characterized in that** the or each collecting element (29) is an elongated paddle (30).

5. Lubricated bearing arrangement according to claim 4, **characterized in that** the paddle (30) extend axially and parallel to the center axis of the collecting ring (15).

6. Lubricated bearing arrangement according to one of the preceding claims, **characterized in that** the first collecting means (14), especially the collecting ring (15), is directly attached to the rotating outer ring (6) by means of screw connections (28).

7. Lubricated bearing arrangement according to one of the preceding claims, **characterized in that** the second collecting means (18) is attached to the inner ring (7) by means of screw connections.

8. Lubricated bearing arrangement according to one of the preceding claims, **characterized in that** the second collecting means (18) comprises a second collecting ring (19) provided with the catching means (20).

9. Lubricated bearing arrangement according to claim 8, **characterized in that** the collecting ring (19) is a seal carrier ring (27) sealing the area of the bearing (5) which is provided with the lubricant.

10. Lubricated bearing arrangement according to one of the preceding claims, **characterized in that** at least two catching means (20) are provided at opposite positions.

11. Lubricated bearing connection according to one of the preceding claims, **characterized in that** the or each catching means (20) is a gutter (31), wherein the gutter (31) is either realized by a gutter element arranged at the outside surface of the collecting ring (19) or is a depression (32) provided into the outside surface (17) of the collecting ring (19) .

12. Lubricated bearing arrangement according to one of the preceding claims, **characterized in that** the second collecting means (18) comprises at least one transport opening (33) adjacent to the catching means (20), which transport opening (33) communicates with the transport means (21) connected to the second collecting means (18).

13. Lubricated bearing arrangement according to claim 12, **characterized in that** the transport opening (33) is an axial bore provided in the second collecting means (18), especially the collecting ring (19) and preferably in the seal carrier ring (27), which bore opens to a front surface (34) of the collecting means (18).

14. Lubricated bearing arrangement according one of the preceding claims, **characterized in that** the transport means (21) is a hose or piping (36).

15. Wind turbine, comprising a lubricated bearing arrangement (9) according to one of the preceding claims.
